# EUROPEAN PATENT SPECIFICATION

(11) **EP 4 467 847 B1**
(45) Date of publication and mention of the grant of the patent: **26.08.2026**
(21) Application number: 23742923.8
(22) Date of filing: 18.01.2023
(51) Int. Cl.: F16H 61/04, B60K 6/48, B60W 10/02, B60W 10/06, B60W 10/08, B60W 20/00, B60W 30/18

(54) **VEHICLE START CONTROL METHOD AND APPARATUS**
VERFAHREN UND VORRICHTUNG ZUR FAHRZEUGSTARTSTEUERUNG
PROCÉDÉ ET APPAREIL DE COMMANDE DE DÉMARRAGE DE VÉHICULE

(30) Priority: 20.01.2022 CN 202210068435
(43) Date of publication of application: 27.11.2024
(73) Proprietor: Great Wall Motor Company Limited, Baoding, Hebei 071000 (CN)
(72) Inventor: SI, Wen, Baoding, Hebei 071000 (CN); TIAN, Hui, Baoding, Hebei 071000 (CN)
(74) Representative: Klunker IP Patentanwälte PartG mbB
(86) International application number: PCT/CN2023/072826
(87) International publication number: WO 2023/138608

(56) References cited:
- CN-A- 104 246 318
- CN-A- 106 795 961
- CN-A- 109 356 734
- CN-A- 110 242 743
- CN-A- 113 847 423
- CN-A- 115 111 361
- JP-A- 2009 202 868
- JP-A- 2012 057 670
- US-A1- 2007 199 745
- US-A1- 2016 031 438
- US-A1- 2021 171 014
- US-B2- 9 789 866

## Description

### TECHNICAL FIELD

The present invention relates to the technical field of vehicle-starting controlling, and particularly to a method and apparatus for controlling starting of a vehicle and a vehicle comprising such an apparatus.

### BACKGROUND

Hydraulic automatic gearboxes (Automatic Transmission, AT), as an automatic gearbox that has a reliable structure and a good smoothness, because the lock-up clutch in their hydraulic torque converter is in the disengagement state at a low speed, can realize deceleration and torque increasing in the low-speed state, to improve the off-road performance of vehicles.

However, also because the lock-up clutch is in the disengagement state, the torque outputted by the engine requires being transmitted from the pump impeller in the hydraulic torque converter by a hydraulic force to the turbine therein, and a certain flow rate is required to be established to drive the turbine to rotate. Therefore, the torque outputted by the engine has hysteresis, and cannot be timely transmitted out via the hydraulic torque converter. As a result, after a vehicle has been equipped with a gearbox formed by a hydraulic torque converter, the vehicle has the problems of a slow low-speed starting and a slow power response.

US 2021/171014 A1 relates to hybrid vehicles including both an internal combustion engine and an electric machine that are each configured to propel the vehicle. The vehicle powertrain with the internal combustion engine and the electric machine coupled via a disconnect clutch (or alternatively, via a torque converter with an impeller on the machine rotor) includes a hydraulic pump driven by the electric machine to supply clutch actuation pressure. A controller monitors impeller/rotor speed and, when that speed drops below a first threshold indicating an impending pump shutdown, and with the internal combustion engine off and the disconnect clutch open, commands advancement of the disconnect clutch to a "touch point" so the opposing clutch faces contact while transmitting substantially zero power between the internal combustion engine and the electric machine.

### SUMMARY

It is an object of the present invention to provide a method and apparatus for controlling starting of a vehicle and a vehicle comprising such an apparatus, to solve the problem that, after a vehicle has been equipped with a gearbox formed by a hydraulic torque converter, the vehicle has a slow low-speed starting and a slow power response.

The object is achieved by the features of independent claim 1 regarding the method, of independent claim 14 regarding the apparatus, and of claim 15 regarding the vehicle Further s are defined in the dependent claims.

The present invention provides a method and apparatus for controlling starting of a vehicle and a vehicle comprising such an apparatus, which employs a power architecture that includes a P2 electric motor and a gearbox that includes a hydraulic torque converter. The controlling method includes firstly acquiring the starting type of the vehicle, and determining the basic power output value and the hydraulic-conversion hysteresis compensation value for compensating for the hysteresis amount of the hydraulic torque converter that correspond to that starting type; subsequently, compensating for the basic power output value according to the hydraulic-conversion hysteresis compensation value, and according to the target power output value obtained after the compensation, determining the to-be-outputted torques of the P2 electric motor and the engine, or the to-be-outputted torque of the P2 electric motor, with respect to the starting type; and, finally, controlling the vehicle to start according to the to-be-outputted torques of the P2 electric motor and the engine or the to-be-outputted torque of the P2 electric motor. In an aspect, the controlling method compensates for the basic power output value by using the hydraulic-conversion hysteresis compensation value, and can predict the required target power output value based on the variation of the torque transmission characteristic of the hydraulic torque converter at the starting stage, and the to-be-outputted torque that is determined and obtained according to the predicted target power output value that is obtained after the compensation can increase the power response speed of the vehicle. In another aspect, the power architecture that includes the P2 electric motor and the gearbox that includes the hydraulic torque converter can utilize the characteristics of the P2 electric motor of a quick torque response and a high precision, thereby increasing the power response speed of the vehicle, to realize quick starting.

### BRIEF DESCRIPTION OF THE DRAWINGS

In order to more clearly illustrate the technical solutions of the present invention, the figures that are required to describe the invention or the prior art will be briefly described below.
FIG. 1 is a schematic structural diagram of a hydraulic torque converter in a hydraulic automatic gearbox;
FIG. 2 is a flow chart of the implementation of a method for controlling starting of a vehicle;
FIG. 3 is a schematic diagram of a power-system architecture;
FIG. 4 is a flow chart of the implementation of a method for controlling starting of a vehicle with respect to creep starting;
FIG. 5 is a flow chart of the implementation of a method for controlling starting of a vehicle with respect to accelerated starting;
FIG. 6 is a schematic structural diagram of an apparatus for controlling starting of a vehicle; and
FIG. 7 is a schematic diagram of a controller.

### DETAILED DESCRIPTION

In the following description, in order for description rather than limitation, particular details such as particular system structures and techniques are provided, to facilitate to thoroughly comprehend the present invention. However, a person skilled in the art should clearly know that the present invention as defined in the claims may also be embodied in s that do not have those particular details. In other cases, the detailed description on the well-known systems, devices, circuits and methods is omitted, to prevent affecting the description on the present invention by unnecessary details.

In order to make the objects, the technical solutions and the advantages of the present invention clearer, the present invention will be described below with reference to the drawings.

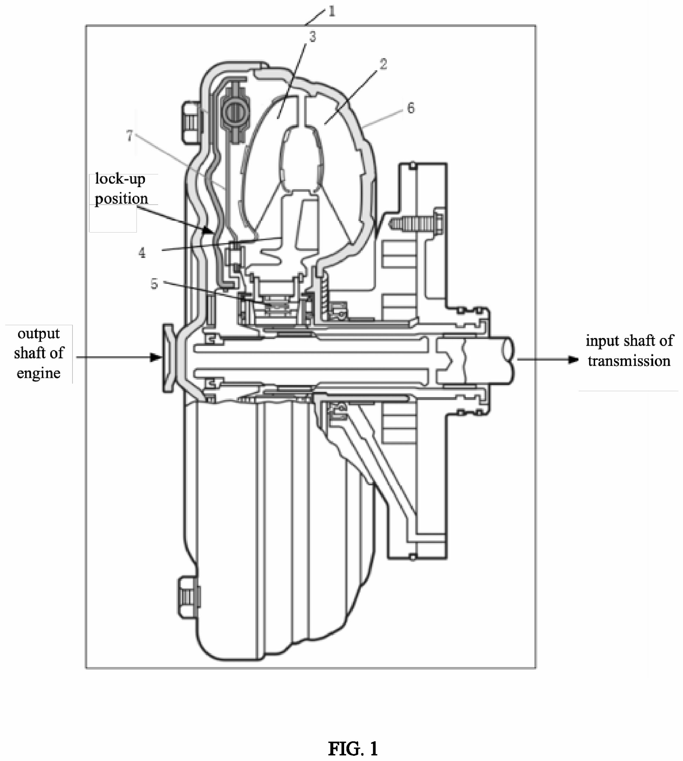

A hydraulic automatic gearbox is generally formed by a hydraulic torque converter and a planetary-gear transmission. FIG. 1 is a schematic structural diagram of a hydraulic torque converter in a hydraulic automatic gearbox. As shown in FIG. 1, the hydraulic torque converter 1 is formed mainly by a pump impeller 2, a turbine 3, a guide pulley 4, a one-way clutch 5, a torque-converter housing 6, a lock-up clutch 7 and so on. The pump impeller 2 is mounted to the torque-converter housing 6, and the torque-converter housing 6 may be fastened by using bolts. The pump impeller 2 is connected to the output shaft of the engine, and is rotatable by its driving. The turbine 3 is the outputting component of the hydraulic torque converter, and is connected to the input shaft of the planetary-gear transmission via a spline. When the pump impeller 2 is rotating, it drives the liquid inside the torque-converter housing 6 to flow and impact the turbine 3, to enable the turbine 3 to rotate and output the torque. The guide pulley 4 is located between the pump impeller 2 and the turbine 3, and it can change the angle of the impact by the liquid on the turbine 3, thereby changing the outputted torque of the turbine 3. The guide pulley 4 is provided with the one-way clutch 5, and the one-way clutch 5 causes that the guide pulley 4 can merely rotate in the same direction as the pump impeller 2, and cannot rotate in the reverse direction. The lock-up clutch 7, in the engagement state, can realize the mechanical connection between the pump impeller 2 and the turbine 3, whereby the hydraulic transmission between the pump impeller 2 and the turbine 3 is converted into mechanical transmission to increase the transmission efficiency.

When a vehicle equipped with the hydraulic automatic gearbox is travelling in an unstable operation condition (for example, low-speed states such as starting), because the liquid in the hydraulic torque converter 1 (for example, transmission oil) flows to the front of the lock-up clutch 7, which causes the pressures of the front and the rear of the lock-up clutch 7 to be equal, the lock-up clutch 7 is in the disengagement state. In this case, the torque generated by the engine drives the pump impeller 2 to rotate, and the blades of the pump impeller 2 drive the transmission oil to impact the turbine 3, thereby driving the turbine 3 to rotate. Furthermore, the guide pulley 4, by the effect of the one-way clutch, hinders the gearbox oil, to cause it to counter-act on the turbine 3, whereby the impact force of the gearbox oil exerted on the turbine 3 is doubled. Therefore, the vehicle equipped with the hydraulic automatic gearbox, in the low-speed state, can decelerate while increasing the torque, thereby having a good off-road performance.

However, although the vehicle equipped with the hydraulic automatic gearbox has a good off-road performance in the low-speed state, because its lock-up clutch is in the disengagement state, the torque outputted by the engine has hysteresis, which affects the power response and the starting of the vehicle in the low-speed state.

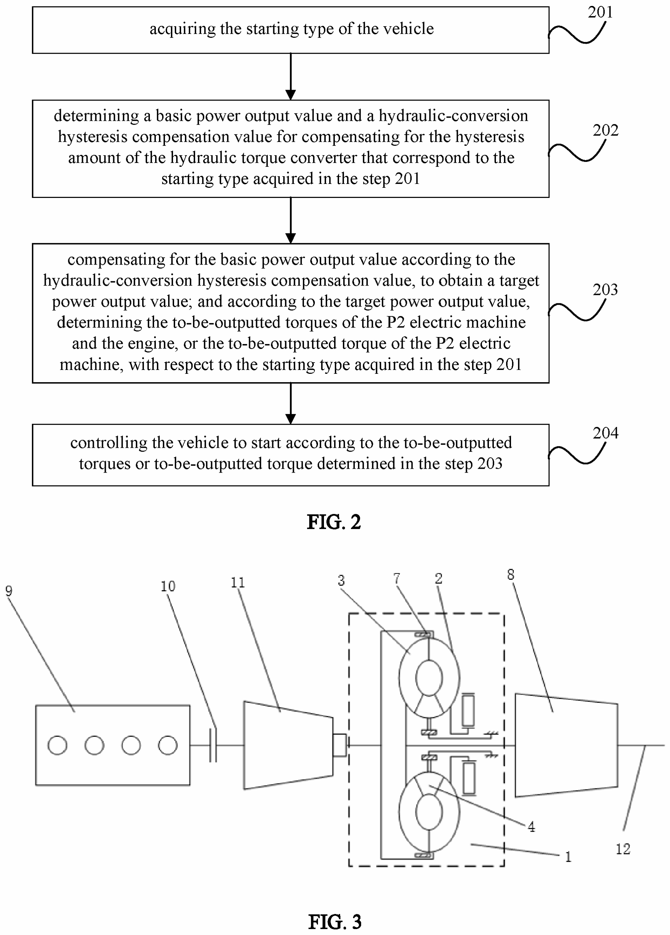

In view of the above problem, the present invention provides a method for controlling starting of a vehicle. FIG. 2 is a flow chart of the implementation of the method. The controlling method according to the present invention can be applied to a hybrid-power vehicle employing the P2 architecture and equipped with a hydraulic automatic transmission. As shown in FIG. 3, the power system of the vehicle has a P2 electric motor 11 and a gearbox that includes a hydraulic torque converter 1, and the power system of the vehicle further has an engine 9, a K0 clutch 10, a main gearbox body 8 and a gearbox output shaft 12. The hydraulic torque converter 1 has a pump impeller 2, a turbine 3, a guide pulley 4 and a lock-up clutch 7. By the engagement and the disengagement of the K0 clutch 10, the engine 9 and a P2 electric motor 11 may be engaged or disengaged. If the K0 clutch 10 is disengaged, then the engine 9 and the P2 electric motor 11 are disengaged, and the P2 electric motor 11 solely drives the vehicle wheels, in which case the vehicle operates in a purely electric mode. If the K0 clutch 10 is engaged, then the engine 9 and the P2 electric motor 11 are engaged, and the engine 9 and the P2 electric motor 11 drive the vehicle wheels together, in which case the vehicle operates in a hybrid-power mode.

Referring to FIG. 2, the method for controlling starting of a vehicle includes totally four steps from the step 201 to the step 204. The four steps will be described in detail below.

Step 201: acquiring the starting type of the vehicle.

Before the starting type of the vehicle is acquired, it may be firstly determined whether the vehicle is in a to-start state. For example, it may be determined whether the vehicle is in the to-start state according to a key signal, a gear signal, a brake-pedal signal, and so on, of the vehicle. Generally, when the key has been turned to the ON gear, after the entire-vehicle controller has controlled the high-voltage and low-voltage systems of the vehicle to be powered on, when the brake-pedal signal is not-braking and the gear signal is the D/R gear, it may be determined that the vehicle is in the to-start state. When the brake-pedal signal is being-braking or the gear signal is the P/N gear, it may be determined that the vehicle is not in the to-start state, and the gearbox is required to disengage the clutch to cut off the power.

When the vehicle is in the to-start state, the starting type of the vehicle may be acquired by acquiring the state of the accelerator pedal. For example, if the accelerator pedal is in an unpressed state, then it may be determined that the starting type of the vehicle is creep starting. If the accelerator pedal is in a pressed state, then it may be determined that the starting type of the vehicle is accelerated starting. Regarding the different starting types, it is required to employ different controlling logics to realize the vehicle starting. Therefore, in the step 201, firstly the starting type of the vehicle may be acquired, and subsequently the subsequent starting controlling may be performed according to the different starting types.

Step 202: determining a basic power output value and a hydraulic-conversion hysteresis compensation value for compensating for the hysteresis amount of the hydraulic torque converter that correspond to the starting type acquired in the step 201.

The basic power output values and the hydraulic-conversion hysteresis compensation values corresponding to the different starting types (for example, the creep starting and the accelerated starting) are usually different.

In the case in which the vehicle is equipped with a gearbox formed by a hydraulic torque converter, because, in low-speed states such as starting, the lock-up clutch in the hydraulic torque converter is in the disengagement state, the torque outputted by the engine cannot be timely transmitted out via the hydraulic torque converter. Therefore, in the step 202, the hysteresis caused by the hydraulic torque converter may be compensated for with respect to the different starting types. For example, regarding the creep starting, the basic target pump-impeller rotational speed may be corrected by using the hydraulic-conversion load, to realize the prediction on the target rotational speed of the pump impeller. Regarding the accelerated starting, the controlling process requires the communication and the interaction between the entire-vehicle controller and the gearbox controller. Because the communication has delay, in the process when the torque request that has been calculated by the entire-vehicle controller is being sent toward the gearbox controller, the real-time speed ratio of the power train system has already changed, which causes that the torque request originally calculated by the entire-vehicle controller cannot realize the expected acceleration target. In view of that, regarding the accelerated starting, the entire-vehicle controller may compensate for the originally calculated basic accelerator-pedal torque according to the accelerator-pedal opening degree (the accelerator-pedal torque refers to the torque request that is obtained by table looking-up or calculation according to the accelerator-pedal opening degree), to realize the prediction on the target accelerator-pedal torque.

Step 203: compensating for the basic power output value according to the hydraulic-conversion hysteresis compensation value, to obtain a target power output value; and according to the target power output value, determining the to-be-outputted torques of the P2 electric motor and the engine, or the to-be-outputted torque of the P2 electric motor, with respect to the starting type acquired in the step 201.

Step 204: controlling the vehicle to start according to the to-be-outputted torques of the P2 electric motor and the engine or the to-be-outputted torque of the P2 electric motor determined in the step 203.

In the step 203, when the vehicle is operating in the purely electric mode, the to-be-outputted torque of the P2 electric motor with respect to the starting type may be determined according to the target power output value obtained after the compensation. When the vehicle is operating in the hybrid-power mode, the to-be-outputted torques of the P2 electric motor and the engine with respect to the starting type may be determined according to the target power output value obtained after the compensation. By utilizing the characteristics of the P2 electric motor of a quick torque response and a high precision, comprehensively taking into consideration the target power output value obtained after the compensation, and predicting based on the variation of the torque transmission characteristic of the hydraulic torque converter at the starting stage, the power response speed of the vehicle can be effectively increased, to realize quick starting.

The method for controlling starting of a vehicle shown in FIG. 1 is suitable for a vehicle that employs the power architecture that includes a P2 electric motor and a gearbox that includes a hydraulic torque converter. The controlling method includes firstly acquiring the starting type of the vehicle, and determining the basic power output value and the hydraulic-conversion hysteresis compensation value for compensating for the hysteresis amount of the hydraulic torque converter that correspond to that starting type; subsequently, compensating for the basic power output value according to the hydraulic-conversion hysteresis compensation value, and according to the target power output value obtained after the compensation, determining the to-be-outputted torques of the P2 electric motor and the engine, or the to-be-outputted torque of the P2 electric motor, with respect to the starting type; and, finally, controlling the vehicle to start according to the to-be-outputted torques of the P2 electric motor and the engine or the to-be-outputted torque of the P2 electric motor. In an aspect, the controlling method compensates for the basic power output value by using the hydraulic-conversion hysteresis compensation value, and can predict the required target power output value based on the variation of the torque transmission characteristic of the hydraulic torque converter at the starting stage, and the to-be-outputted torque that is determined and obtained according to the predicted target power output value that is obtained after the compensation can increase the power response speed of the vehicle. In another aspect, the power architecture that includes the P2 electric motor and the gearbox that includes the hydraulic torque converter can utilize the characteristics of the P2 electric motor of a quick torque response and a high precision, thereby increasing the power response speed of the vehicle, to realize quick starting.

As an alternative, the starting type of the vehicle acquired in the step 201 may include the creep starting. The corresponding basic power output value with respect to the creep starting may include a purely-electric-creep-pump-impeller basic target rotational speed and a traditional-creep-pump-impeller basic target rotational speed. The corresponding hydraulic-conversion hysteresis compensation value with respect to the creep starting may include a first rotational-speed compensation value.

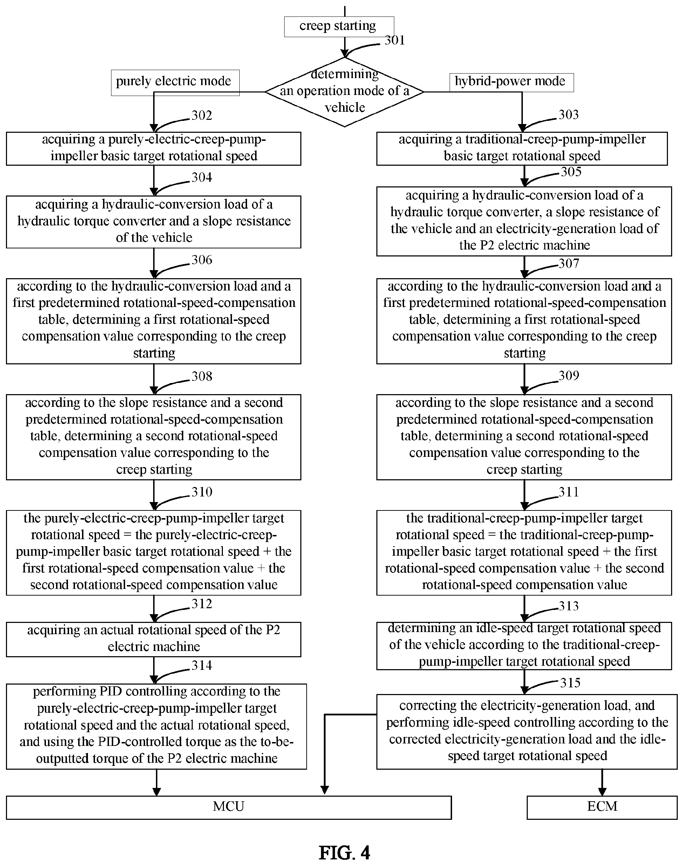

FIG. 4 shows a flow chart of the implementation of the method for controlling starting of a vehicle with respect to the creep starting. As shown in FIG. 4, the controlling method may include totally fifteen steps of the step 301 to the step 315. Those steps will be described in detail below.

Step 301: acquiring the operation mode of the vehicle.

The operation mode of the vehicle may be acquired by determining whether the engine has been started up. Alternatively, the operation mode of the vehicle may also be acquired by acquiring the state of the K0 clutch and determining the state of the K0 clutch.

If the engine is in the off-state, or the K0 clutch is in the disengagement state, then it may be determined that the vehicle is operating in the purely electric mode. If the engine is in the on-state, and the K0 clutch is in the engagement state, then it may be determined that the vehicle is operating in the hybrid-power mode.

After the operation mode of the vehicle has been acquired in the step 301, if the vehicle is operating in the purely electric mode, then the steps 302, 304, 306, 308, 310, 312 and 314 are executed.

Step 302: acquiring the purely-electric-creep-pump-impeller basic target rotational speed.

As an example, the purely-electric-creep-pump-impeller basic target rotational speed may be 800rpm.

Step 304: acquiring the hydraulic-conversion load of the hydraulic torque converter and the slope resistance of the vehicle.

As an example, the hydraulic-conversion load is =C1*C2*n², wherein C1 represents an oil-temperature correction factor of the hydraulic torque converter, C2 represents a speed-ratio correction factor, and n represents the basic target pump-impeller rotational speed. The speed ratio refers to the ratio of the turbine rotational speed to the basic target pump-impeller rotational speed. Regarding the purely electric mode, the basic target pump-impeller rotational speed is the purely-electric-creep-pump-impeller basic target rotational speed. Regarding the hybrid-power mode, the basic target pump-impeller rotational speed is the traditional-creep-pump-impeller basic target rotational speed.

The sequence of the step 302 and the step 304 is not limited, and they may be simultaneously executed, and may also be sequentially executed. The purely-electric-creep-pump-impeller basic target rotational speed acquired in the step 302 may be corrected according to the hydraulic-conversion load and the slope resistance acquired in the step 304, so as to increase the purely-electric-creep-pump-impeller basic target rotational speed, thereby increasing the power response speed of the vehicle, to realize quick starting.

Step 306: according to the hydraulic-conversion load and a first predetermined rotational-speed-compensation table, determining the first rotational-speed compensation value corresponding to the creep starting.

Step 308: according to the slope resistance and a second predetermined rotational-speed-compensation table, determining a second rotational-speed compensation value corresponding to the creep starting.

Step 310: compensating for the purely-electric-creep-pump-impeller basic target rotational speed according to the first rotational-speed compensation value and the second rotational-speed compensation value.

The sequence of the step 306 and the step 308 is not limited. Before the two steps, the first predetermined rotational-speed-compensation table and the second predetermined rotational-speed-compensation table may be obtained by pre-calibration. The first predetermined rotational-speed-compensation table is a table of the correspondence relation between the hydraulic-conversion loads and the first rotational-speed compensation values, and the second predetermined rotational-speed-compensation table is a table of the correspondence relation between the slope resistances and the second rotational-speed compensation values. After the hydraulic-conversion load and the slope resistance have been obtained, the first rotational-speed compensation value and the second rotational-speed compensation value are determined directly by table looking-up.

As an example, the first predetermined rotational-speed-compensation table may be as shown by Table 1, and the second predetermined rotational-speed-compensation table may be as shown by Table 2.

**Table 1**

| | | | | | | | | | | |
|---|---|---|---|---|---|---|---|---|---|---|
| Hydraulic-conversion load/N·m | 5 | 10 | 15 | 20 | 26 | 65 | 85 | 95 | 110 | 125 |
| First rotational-speed compensation value/rpm | 0 | 30 | 50 | 75 | 75 | 75 | 75 | 75 | 75 | 75 |

**Table 2**

| | | | | | | | | | |
|---|---|---|---|---|---|---|---|---|---|
| Slope resistance/% | 0 | 5 | 10 | 13 | 16 | 18 | 20 | 25 | 28 |
| Second rotational-speed compensation value/rpm | 0 | 20 | 50 | 70 | 90 | 100 | 120 | 120 | 150 |

Table 1 and Table 2 are merely examples of the first predetermined rotational-speed-compensation table and the second predetermined rotational-speed-compensation table, and do not limit the first predetermined rotational-speed-compensation table and the second predetermined rotational-speed-compensation table. Particularly, the first predetermined rotational-speed-compensation table and the second predetermined rotational-speed-compensation table may be obtained by calibration according to practical demands.

As an example, assuming that the obtained hydraulic-conversion load is 10N·m and the slope is 5%, then it can be obtained by looking up Table 1 and Table 2 that the first rotational-speed compensation value is 30rpm, and the second rotational-speed compensation value is 20rpm. Moreover, the purely-electric-creep-pump-impeller basic target rotational speed is 800rpm, so the purely-electric-creep-pump-impeller target rotational speed that has been compensated for is 850rpm.

In the step 310, the purely-electric-creep-pump-impeller basic target rotational speed is compensated for according to the first rotational-speed compensation value and the second rotational-speed compensation value. In other words, the sum of the first rotational-speed compensation value, the second rotational-speed compensation value and the purely-electric-creep-pump-impeller basic target rotational speed is calculated, to obtain the purely-electric-creep-pump-impeller target rotational speed that has been compensated for (i.e., the target power output value obtained after the compensation).

Step 312: acquiring the actual rotational speed of the P2 electric motor.

Step 314: according to the purely-electric-creep-pump-impeller target rotational speed and the actual rotational speed, determining the to-be-outputted torque of the P2 electric motor corresponding to the purely electric mode with respect to the creep starting.

After the purely-electric-creep-pump-impeller target rotational speed has been determined, Proportion-Integral-Differential (PID) controlling may be performed according to the purely-electric-creep-pump-impeller target rotational speed and the actual rotational speed of the P2 electric motor, and the torque obtained by calculation by using the PID algorithm may be, as the torque request of the P2 electric motor (i.e., the to-be-outputted torque of the P2 electric motor), sent to an electric-motor controller (Motor Control Unit, MCU).

As an example, if the purely-electric-creep-pump-impeller target rotational speed obtained by calculation in the step 310 is 1025rpm, and the actual rotational speed of the P2 electric motor is 195rpm, then the to-be-outputted torque of the P2 electric motor that is obtained by the PID controlling may be 171.6N·m.

By using the steps 302-314, in an aspect, the purely-electric-creep-pump-impeller basic target rotational speed can be corrected based on the hydraulic-conversion load. In another aspect, the purely-electric-creep-pump-impeller basic target rotational speed can be corrected based on the environmental resistance, for example, the slope resistance. The purely-electric-creep-pump-impeller target rotational speed obtained by the correction can increase the purely-electric-creep-pump-impeller basic target rotational speed, thereby increasing the power response speed of the vehicle, to realize quick starting.

After the operation mode of the vehicle has been acquired in the step 301, if the vehicle is operating in the hybrid-power mode, then the steps 303, 305, 307, 309, 311, 313 and 315 are executed.

Step 303: acquiring the traditional-creep-pump-impeller basic target rotational speed.

As an example, the traditional-creep-pump-impeller basic target rotational speed may be 800rpm.

Step 305: acquiring the hydraulic-conversion load of the hydraulic torque converter, the slope resistance of the vehicle and the electricity-generation load of the P2 electric motor.

The sequence of the step 303 and the step 305 is not limited. The processes of acquiring the hydraulic-conversion load of the hydraulic torque converter and the slope resistance of the vehicle are similar to those of the step 304, and are not discussed further herein. In addition, in the step 305, the electricity-generation load of the P2 electric motor is also acquired. Regarding the traditional creep in the hybrid-power mode, on the basis of the correction on the traditional-creep-pump-impeller basic target rotational speed according to the hydraulic-conversion load and the slope resistance, the electricity-generation load of the P2 electric motor may be reduced, so as to reduce the torque that the engine is required to output, thereby increasing the power response speed of the vehicle.

Step 307: according to the hydraulic-conversion load and a first predetermined rotational-speed-compensation table, determining the first rotational-speed compensation value corresponding to the creep starting.

Step 309: according to the slope resistance and a second predetermined rotational-speed-compensation table, determining a second rotational-speed compensation value corresponding to the creep starting.

Step 311: compensating for the traditional-creep-pump-impeller basic target rotational speed according to the first rotational-speed compensation value and the second rotational-speed compensation value.

The sequence of the step 307 and the step 309 is not limited. The processes of determining the first rotational-speed compensation value and the second rotational-speed compensation value may refer to the step 306 and the step 308. The table looking-up in the first predetermined rotational-speed-compensation table according to the hydraulic-conversion load and the table looking-up in the second predetermined rotational-speed-compensation table according to the slope resistance may refer to the detailed description on the step 310. Those contents are not discussed further herein.

In the step 310, the traditional-creep-pump-impeller basic target rotational speed is compensated for according to the first rotational-speed compensation value and the second rotational-speed compensation value. In other words, the sum of the first rotational-speed compensation value, the second rotational-speed compensation value and the traditional-creep-pump-impeller basic target rotational speed is calculated, to obtain the traditional-creep-pump-impeller target rotational speed that has been compensated for (i.e., the target power output value obtained after the compensation).

Step 313: according to the traditional-creep-pump-impeller target rotational speed, determining an idle-speed target rotational speed of the vehicle.

Step 315: correcting the electricity-generation load of the P2 electric motor, and performing idle-speed controlling according to the corrected electricity-generation load and the idle-speed target rotational speed, to determine the to-be-outputted torques of the P2 electric motor and the engine corresponding to the hybrid-power mode with respect to the creep starting.

In the step 313, the traditional-creep-pump-impeller target rotational speed may be directly determined to be the idle-speed target rotational speed of the vehicle. For example, if the traditional-creep-pump-impeller target rotational speed obtained in the step 311 is 1050rpm, then, in the step 313, it can be determined that the idle-speed target rotational speed of the vehicle is 1050rpm.

Referring to the step 305, the corrected electricity-generation load is less than the currently acquired electricity-generation load, to reduce the electricity-generation load of the P2 electric motor, which may particularly be embodied by correcting the electricity-generation load of the P2 electric motor. For example, the current electricity-generation torque of the P2 electric motor may be acquired. If the current electricity-generation torque of the P2 electric motor is large, that indicates that, in order to maintain the state of charge of the power battery or enable the power battery to operate in the safe state, the P2 electric motor requires a large electricity-generation torque (i.e., the electricity-generation load of the P2 electric motor is large, and the electricity-generation torque is provided by the engine). In this case, the torque that is required to be outputted by the engine and generates electricity for the P2 electric motor may be reduced by reducing the electricity-generation load to a small extent. If the current electricity-generation torque of the P2 electric motor is small, that indicates that the state of charge or the operation state of the power battery is relatively safe, and the electricity-generation load of the P2 electric motor is small. In this case, the torque that is required to be outputted by the engine and generates electricity for the P2 electric motor may be reduced by reducing the electricity-generation load to a large extent.

As an example, if the current electricity-generation torque of the P2 electric motor (i.e., the electricity-generation load of the P2 electric motor) is -30N·m, then the electricity-generation torque that has been corrected (i.e., the corrected electricity-generation load) may be 0, so as to, when the electricity-generation load of the P2 electric motor is small, reduce a major part of the electricity-generation load to reduce the torque that is required to be outputted by the engine and generates electricity for the P2 electric motor. If the current electricity-generation torque of the P2 electric motor is -100N·m, then the electricity-generation torque that has been corrected may be -80N·m, so as to maintain the state of charge of the power battery or enable the power battery to operate in the safe state.

After the electricity-generation load of the P2 electric motor has been corrected, the process may include, according to the corrected electricity-generation load and the idle-speed target rotational speed, performing idle-speed controlling over the traditional creep in the hybrid-power mode, and, based on the idle-speed controlling process, determining the to-be-outputted torque of the engine and the to-be-outputted torque of the P2 electric motor; and subsequently, sending the to-be-outputted torque of the P2 electric motor to the MCU, and sending the to-be-outputted torque of the engine to an engine controller (Engine Control Module, ECM).

By using the steps 303-315, in an aspect, the traditional-creep-pump-impeller basic target rotational speed may be compensated for based on the hydraulic-conversion load and the environmental resistance. In another aspect, the influence by the electricity-generation load of the P2 electric motor on the torque outputted by the engine is also taken into consideration, and the electricity-generation load of the P2 electric motor is reduced to the largest extent. The traditional-creep-pump-impeller target rotational speed obtained after the compensation can increase the traditional-creep-pump-impeller basic target rotational speed. The reduction of the electricity-generation load of the P2 electric motor can reduce the torque that is required to be outputted by the engine and generates electricity for the P2 electric motor, so as to enable the engine to allocate more torque for driving the vehicle to start. In other words, the controlling method including the steps 303-315 cannot only increase the traditional-creep-pump-impeller basic target rotational speed, but also can reduce the torque that is outputted by the engine and generates electricity for the P2 electric motor, thereby increasing the power response speed of the vehicle, to realize quick starting.

As an alternative, the starting type of the vehicle acquired in the step 201 may include the accelerated starting. The corresponding basic power output value with respect to the accelerated starting may include the basic accelerator-pedal torque. The corresponding hydraulic-conversion hysteresis compensation value with respect to the accelerated starting may include an accelerator-pedal shaft-end-torque compensation value.

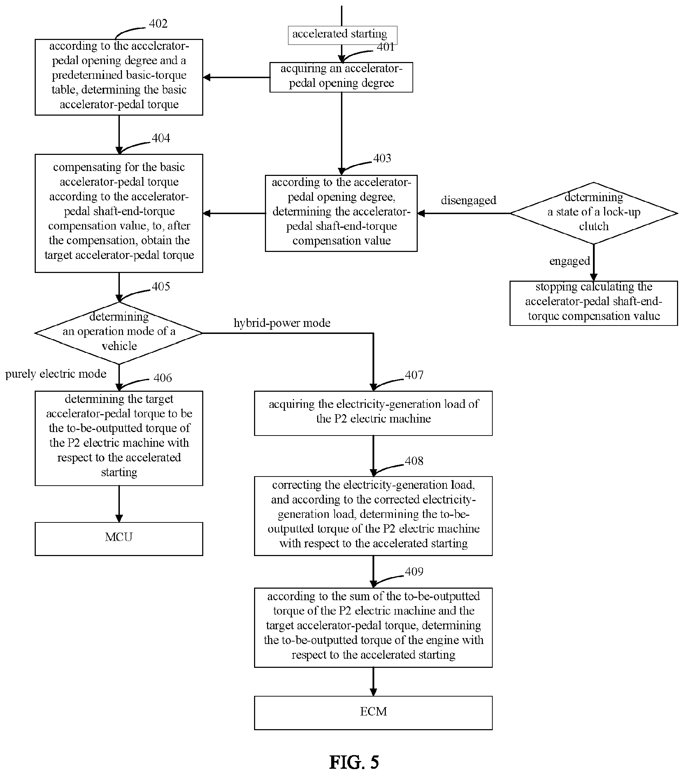

FIG. 5 shows a flow chart of the implementation of the method for controlling starting of a vehicle with respect to the accelerated starting. As shown in FIG. 5, the controlling method may include totally nine steps of the step 401 to the step 409. Those steps will be described in detail below.

Step 401: acquiring the accelerator-pedal opening degree.

Step 402: according to the accelerator-pedal opening degree and a predetermined basic-torque table, determining the basic accelerator-pedal torque corresponding to the accelerated starting.

Usually, the basic accelerator-pedal torque that is obtained by table looking-up according to the accelerator-pedal opening degree is the accelerator-pedal torque when the vehicle is in the stable-operation state. However, in instantaneous states such as the accelerated starting, because the power transmission by the hydraulic torque converter has hysteresis, if the starting controlling is performed based on merely the basic accelerator-pedal torque, then the outputted torque might be not capable of realizing the expected acceleration target, which causes the problems of a slow starting and a slow power response.

The predetermined basic-torque table in the step 402 may be a table of the correspondence relation between the accelerator-pedal opening degrees and the basic accelerator-pedal torques. Optionally, besides table looking-up, the basic accelerator-pedal torque may also be determined by referring to the current vehicle speed. For example, if the current vehicle speed is 10km/h, and the accelerator-pedal opening degree is 10%, by looking up the predetermined basic-torque table, it can be determined that the corresponding basic accelerator-pedal torque is 515N·m. If the current vehicle speed is 10km/h, and the accelerator-pedal opening degree is 5%, by looking up the predetermined basic-torque table, it can be determined that the corresponding basic accelerator-pedal torque is 227N·m.

Step 403: when the state of a lock-up clutch in the hydraulic torque converter is being-disengaged, determining the accelerator-pedal shaft-end-torque compensation value corresponding to the accelerated starting according to the accelerator-pedal opening degree.

When the lock-up clutch is in the disengagement state, the speed ratio of the power train system increases, and the changing of the speed ratio influences the torques of the wheel end and the shaft end of the entire vehicle. In other words, in the process of the communication between the entire-vehicle controller and the gearbox controller, because of the communication delay, the real-time speed ratio of the power train system has already changed, which causes that the torque request calculated by the entire-vehicle controller cannot realize the expected acceleration target. Therefore, in the step 403, the accelerator-pedal shaft-end-torque compensation value corresponding to the accelerated starting is determined according to the accelerator-pedal opening degree, whereby the required target accelerator-pedal torque can be predicted according to the accelerator-pedal shaft-end-torque compensation value.

Because that process is related to the state of the lock-up clutch, before the step 403 is executed, the state of the lock-up clutch may be detected. If the lock-up clutch is in the disengagement state, then the action of the step 403 is executed, i.e., determining the accelerator-pedal shaft-end-torque compensation value corresponding to the accelerated starting according to the accelerator-pedal opening degree. If the lock-up clutch is in the engagement state and the vehicle speed exceeds a certain value, then the calculation of the accelerator-pedal shaft-end-torque compensation value is stopped, and the torque compensation is exited.

As an example, the accelerator-pedal shaft-end-torque compensation value corresponding to the current accelerator-pedal opening degree may be determined by looking up a predetermined torque-compensation table according to the accelerator-pedal opening degree. The predetermined torque-compensation table may be a table of the correspondence relation between the accelerator-pedal opening degrees and the accelerator-pedal shaft-end-torque compensation values. Besides table looking-up, the accelerator-pedal shaft-end-torque compensation value may also be determined by referring to the accelerator-pedal opening degree and a change rate of the accelerator-pedal opening degree at the same time. For example, if the accelerator-pedal opening degree is 10%, and the change rate of the accelerator-pedal opening degree is 50%, then the accelerator-pedal shaft-end-torque compensation value may be 100N·m.

Step 404: compensating for the basic accelerator-pedal torque according to the accelerator-pedal shaft-end-torque compensation value, to, after the compensation, obtain the target accelerator-pedal torque.

If the lock-up clutch is in the disengagement state, then the sum of the accelerator-pedal shaft-end-torque compensation value and the basic accelerator-pedal torque is calculated, thereby obtaining the target accelerator-pedal torque. If the lock-up clutch is in the engagement state, then the basic accelerator-pedal torque may be directly used as the target accelerator-pedal torque.

As an example, if the basic accelerator-pedal torque obtained in the step 402 is 515N·m, and the accelerator-pedal shaft-end-torque compensation value obtained in the step 403 is 100N·m, then, in the step 404, the sum of the accelerator-pedal shaft-end-torque compensation value and the basic accelerator-pedal torque is calculated, and the obtained target accelerator-pedal torque is 615N·m.

Step 405: acquiring the operation mode of the vehicle.

Step 406: if the operation mode is the purely electric mode, determining the target accelerator-pedal torque to be the to-be-outputted torque of the P2 electric motor with respect to the accelerated starting.

As an example, if the target accelerator-pedal torque obtained in the step 404 is 615N·m, in the step 406, 615N·m may be determined to be the to-be-outputted torque of the P2 electric motor with respect to the accelerated starting.

The particular process of acquiring the operation mode of the vehicle may refer to the step 301, and is not discussed further herein. If the operation mode is the purely electric mode, Then the process includes, at the stage when the lock-up clutch is not engaged, compensating for the basic accelerator-pedal torque according to the accelerator-pedal shaft-end-torque compensation value, sending the target accelerator-pedal torque obtained after the compensation as the torque request of the P2 electric motor (the to-be-outputted torque of the P2 electric motor with respect to the accelerated starting) to the MCU, till the lock-up clutch is engaged, and exiting the torque compensation.

Step 407: if the operation mode is the hybrid-power mode, acquiring an electricity-generation load of the P2 electric motor.

Step 408: correcting the electricity-generation load, and according to the corrected electricity-generation load, determining the to-be-outputted torque of the P2 electric motor with respect to the accelerated starting.

Step 409: according to the sum of the to-be-outputted torque of the P2 electric motor and the target accelerator-pedal torque, determining the to-be-outputted torque of the engine with respect to the accelerated starting.

In the step 408, the corrected electricity-generation load is less than the currently acquired electricity-generation load. If the operation mode is the hybrid-power mode, then, on the basis of the compensation for the basic accelerator-pedal torque according to the accelerator-pedal shaft-end-torque compensation value, and by taking into consideration the limited capacity of the engine in the low-rotational-speed state, part of the electricity-generation load of the P2 electric motor may be exited at the stage of the accelerated starting, so as to ensure the power performance of the entire vehicle.

The steps 407-409 may be particularly executed through the following steps:
acquiring the current electricity-generation torque of the P2 electric motor and the current vehicle speed of the vehicle;
according to the current electricity-generation torque, the current vehicle speed and a predetermined starting-torque correction table, determining a corrected starting torque;
determining the difference between the current electricity-generation torque and the corrected starting torque (i.e., the corrected electricity-generation load) to be the to-be-outputted torque of the P2 electric motor with respect to the accelerated starting; and
determining the sum of the to-be-outputted torque of the P2 electric motor and the target accelerator-pedal torque to be the to-be-outputted torque of the engine with respect to the accelerated starting.

The predetermined starting-torque correction table may be a table of the correspondence relation among the electricity-generation torques, the vehicle speeds and the corrected starting torques. For example, if the current vehicle speed is 4km/h, and the current electricity-generation torque is - 30N·m, the corrected starting torque that is determined by table looking-up is -30N·m; in other words, the corrected electricity-generation load is 0. In other words, when the current electricity-generation torque is small, the electricity-generation load of the P2 electric motor may be completely exited, so as to ensure the power performance of the entire vehicle. As another example, if the current vehicle speed is 4km/h, and the current electricity-generation torque is -100N·m, the corrected starting torque that is determined by table looking-up is -20N·m; in other words, the corrected electricity-generation load is -80N·m. In other words, when the current electricity-generation torque is large, the electricity-generation load of the P2 electric motor may be partially exited, so as to ensure the power performance of the entire vehicle, and part of the electricity-generation load of the P2 electric motor is maintained, so as to maintain the state of charge of the power battery or enable the power battery to operate in the safe state.

As corresponding to the above two cases, assuming that the target accelerator-pedal torque obtained in the step 404 is 615N·m, if the corrected electricity-generation load is 0, then the to-be-outputted torque of the P2 electric motor with respect to the accelerated starting is 0, and the to-be-outputted torque of the engine with respect to the accelerated starting is 615N·m. If the corrected electricity-generation load is -80N·m, then the to-be-outputted torque of the P2 electric motor with respect to the accelerated starting is 80N·m, and the to-be-outputted torque of the engine with respect to the accelerated starting is 695N·m.

At the stage when the lock-up clutch is not engaged, the basic accelerator-pedal torque is compensated for according to the accelerator-pedal shaft-end-torque compensation value, and, simultaneously, the electricity-generation torque request of the P2 electric motor with respect to the starting stage is corrected by using the current electricity-generation torque of the P2 electric motor. If the current electricity-generation torque of the P2 electric motor is larger, the electricity-generation torque of the P2 electric motor at the starting stage is larger; in other words, the corrected starting torque used for correcting the current electricity-generation torque of the P2 electric motor is smaller. The corrected starting torque may be obtained particularly by table looking-up according to the current electricity-generation torque of the P2 electric motor and the current vehicle speed. Generally, if the vehicle speed is lower and the current electricity-generation torque is smaller, the corrected starting torque is larger. Subsequently, the difference between the current electricity-generation torque and the corrected starting torque is, as the to-be-outputted torque of the P2 electric motor, allocated to the P2 electric motor and sent to the MCU, and the sum of the to-be-outputted torque of the P2 electric motor and the target accelerator-pedal torque is, as the to-be-outputted torque of the engine, sent to the ECM, till the lock-up clutch is engaged and the torque compensation is exited.

The method for controlling starting of a vehicle according to the present invention may be applied to a vehicle that employs the power architecture that includes a P2 electric motor and a gearbox that includes a hydraulic torque converter. The controlling method can, by utilizing the characteristics of the hybrid-power P2 architecture, solve the problem of traditional oil-burning vehicles that, because of the hardware characteristics of the hydraulic automatic gearbox, quick starting cannot be realized. The controlling method includes firstly acquiring the starting type of the vehicle, and determining the basic power output value and the hydraulic-conversion hysteresis compensation value for compensating for the hysteresis amount of the hydraulic torque converter that correspond to that starting type; subsequently, compensating for the basic power output value according to the hydraulic-conversion hysteresis compensation value, and according to the target power output value obtained after the compensation, determining the to-be-outputted torques of the P2 electric motor and the engine, or the to-be-outputted torque of the P2 electric motor, with respect to the starting type; and, finally, controlling the vehicle to start according to the to-be-outputted torques or to-be-outputted torque. The controlling method according to the present invention can predict the variation of the torque transmission characteristic of the hydraulic torque converter at the starting stage, and compensate based on the torque transmission characteristic of the hydraulic torque converter, thereby, without changing the hardware characteristics of the hydraulic torque converter, by controlling the to-be-outputted torques of the engine and the P2 electric motor, improving the manipulating sense at the starting stage of vehicles equipped with the hydraulic torque converter, to realize quick starting.

It should be understood that the sequence of the serial numbers of the steps in the above description do not indicate the sequence of the execution thereof, and the sequence of the execution of the steps should be decided according to their functions and internal logic. The sequence of the serial numbers of the steps should not limit the process of the implementation of the present invention in any manner.

The device (apparatus) s of the present invention will be described below, and the details not described in detail therein may refer to the above-described corresponding processes .

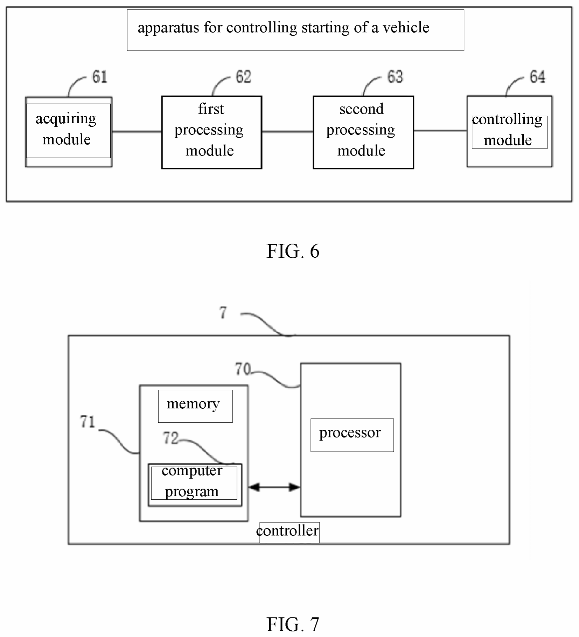

FIG. 6 shows a schematic structural diagram of an apparatus for controlling starting of a vehicle. The vehicle that applies the apparatus for controlling starting of a vehicle is provided with a P2 electric motor and a gearbox that includes a hydraulic torque converter. For the convenience of the description, FIG. 6 merely shows the parts relevant to the present invention.

As shown in FIG. 6, the apparatus for controlling starting of a vehicle includes an acquiring module 61, a first processing module 62, a second processing module 63 and a controlling module 64.

The acquiring module 61 is configured for acquiring a starting type of the vehicle;
the first processing module 62 is configured for determining a basic power output value and a hydraulic-conversion hysteresis compensation value for compensating for a hysteresis amount of the hydraulic torque converter that correspond to the starting type;
the second processing module 63 is configured for compensating for the basic power output value according to the hydraulic-conversion hysteresis compensation value, to obtain a target power output value; and according to the target power output value, determining to-be-outputted torques of the P2 electric motor and an engine, or a to-be-outputted torque of the P2 electric motor, with respect to the starting type; and
the controlling module 64 is configured for controlling the vehicle to start according to the to-be-outputted torques of the P2 electric motor and the engine or the to-be-outputted torque of the P2 electric motor.

The apparatus for controlling starting of a vehicle can be suitable for a vehicle that employs the power architecture that includes a P2 electric motor and a gearbox that includes a hydraulic torque converter. The controlling apparatus includes firstly acquiring the starting type of the vehicle, and determining the basic power output value and the hydraulic-conversion hysteresis compensation value for compensating for the hysteresis amount of the hydraulic torque converter that correspond to that starting type; subsequently, compensating for the basic power output value according to the hydraulic-conversion hysteresis compensation value, and according to the target power output value obtained after the compensation, determining the to-be-outputted torques of the P2 electric motor and the engine, or the to-be-outputted torque of the P2 electric motor, with respect to the starting type; and, finally, controlling the vehicle to start according to the to-be-outputted torques or to-be-outputted torque. In an aspect, the controlling apparatus compensates for the basic power output value by using the hydraulic-conversion hysteresis compensation value, and can predict the required target power output value based on the variation of the torque transmission characteristic of the hydraulic torque converter at the starting stage, and the to-be-outputted torque that is determined and obtained according to the predicted target power output value that is obtained after the compensation can increase the power response speed of the vehicle. In another aspect, the power architecture that includes the P2 electric motor and the gearbox that includes the hydraulic torque converter can utilize the characteristics of the P2 electric motor of a quick torque response and a high precision, thereby increasing the power response speed of the vehicle, to realize quick starting.

In an alternative, the starting type includes creep starting; the basic power output value includes a purely-electric-creep-pump-impeller basic target rotational speed and a traditional-creep-pump-impeller basic target rotational speed; the hydraulic-conversion hysteresis compensation value includes a first rotational-speed compensation value; and the first processing module 62 may be configured for: acquiring an operation mode of the vehicle; if the operation mode is a purely electric mode, acquiring the purely-electric-creep-pump-impeller basic target rotational speed corresponding to the purely electric mode with respect to the creep starting; if the operation mode is a hybrid-power mode, acquiring the traditional-creep-pump-impeller basic target rotational speed corresponding to the hybrid-power mode with respect to the creep starting; acquiring a hydraulic-conversion load of the hydraulic torque converter; and according to the hydraulic-conversion load and a first predetermined rotational-speed-compensation table, determining the first rotational-speed compensation value corresponding to the creep starting.

In an alternative, the first processing module 62 may further be configured for: acquiring a slope resistance of the vehicle; and according to the slope resistance and a second predetermined rotational-speed-compensation table, determining a second rotational-speed compensation value corresponding to the creep starting; and the second processing module 63 may be configured for: if the operation mode is the purely electric mode, compensating for the purely-electric-creep-pump-impeller basic target rotational speed according to the first rotational-speed compensation value and the second rotational-speed compensation value; and if the operation mode is the hybrid-power mode, compensating for the traditional-creep-pump-impeller basic target rotational speed according to the first rotational-speed compensation value and the second rotational-speed compensation value.

In an alternative, the target power output value includes a purely-electric-creep-pump-impeller target rotational speed; and the second processing module 63 may be configured for: acquiring an actual rotational speed of the P2 electric motor; and according to the purely-electric-creep-pump-impeller target rotational speed and the actual rotational speed, determining the to-be-outputted torque of the P2 electric motor corresponding to the purely electric mode with respect to the creep starting.

In an alternative, the target power output value includes a traditional-creep-pump-impeller target rotational speed; and the second processing module 63 may be configured for: acquiring an electricity-generation load of the P2 electric motor; correcting the electricity-generation load, to obtain a corrected electricity-generation load, wherein the corrected electricity-generation load is less than the electricity-generation load; according to the traditional-creep-pump-impeller target rotational speed, determining an idle-speed target rotational speed of the vehicle; and according to the idle-speed target rotational speed and the corrected electricity-generation load, performing idle-speed controlling, to determine the to-be-outputted torques of the P2 electric motor and the engine corresponding to the hybrid-power mode with respect to the creep starting.

In an alternative, the starting type includes accelerated starting; the basic power output value includes a basic accelerator-pedal torque; the hydraulic-conversion hysteresis compensation value includes an accelerator-pedal shaft-end-torque compensation value; and the first processing module 62 may be configured for: acquiring an accelerator-pedal opening degree; according to the accelerator-pedal opening degree and a predetermined basic-torque table, determining the basic accelerator-pedal torque corresponding to the accelerated starting; and when a state of a lock-up clutch in the hydraulic torque converter is being-disengaged, determining the accelerator-pedal shaft-end-torque compensation value corresponding to the accelerated starting according to the accelerator-pedal opening degree.

In an alternative, the target power output value includes a target accelerator-pedal torque; and the second processing module 63 may be configured for: acquiring an operation mode of the vehicle; and if the operation mode is a purely electric mode, determining the target accelerator-pedal torque to be the to-be-outputted torque of the P2 electric motor with respect to the accelerated starting.

In an alternative, the target power output value includes a target accelerator-pedal torque; and the second processing module 63 may be configured for: acquiring an operation mode of the vehicle; if the operation mode is a hybrid-power mode, acquiring an electricity-generation load of the P2 electric motor; correcting the electricity-generation load, to obtain a corrected electricity-generation load, wherein the corrected electricity-generation load is less than the electricity-generation load; according to the corrected electricity-generation load, determining the to-be-outputted torque of the P2 electric motor with respect to the accelerated starting; and determining a sum of the to-be-outputted torque of the P2 electric motor and the target accelerator-pedal torque to be the to-be-outputted torque of the engine with respect to the accelerated starting.

FIG. 7 is a schematic diagram of a controller. As shown in FIG. 7, the controller 7 includes a processor 70, a memory 71, and a computer program 72 that is stored in the memory 71 and executable in the processor 70. The processor 70, when executing the computer program 72, implements the steps of the above s of the method for controlling starting of a vehicle, for example, the step 201 to the step 204 shown in FIG. 2, or the step 301 to the step 315 shown in FIG. 4, or the step 401 to the step 409 shown in FIG. 5. Alternatively, the processor 70, when executing the computer program 72, implements the functions of the modules according to the above device (apparatus)s, for example, the functions of the modules 61 to 64 shown in FIG. 6.

As an example, the computer program 72 may be divided into one or more modules/units. For example, the computer program 72 may be divided into the modules 61 to 64 shown in FIG. 6. Those modules/units are stored in the memory 71, and executed by the processor 70, to complete the technical solutions according to the present invention defined in the claims. Those modules/units may be a series of computer program instruction segments that can complete specific functions, and the instruction segments can describe the process of the execution of the computer program 72 in the controller 7.

The controller 7 may be an entire-vehicle controller or another controlling device that controls the vehicle. The controller 7 may include, without limitation, a processor 70 and a memory 71. A person skilled in the art can understand that FIG. 7 is merely an example of the controller 7, and does not limit the controller 7, and the controller 7 may include more or fewer components than those shown in FIG. 7, or a combination of some of the components, or different components. For example, the controller 7 may further include an inputting-outputting device, a network accessing device, a bus and so on.

The processor 70 may be a Central Processing Unit (CPU), and may also be another generic processor, Digital Signal Processor (DSP), Application Specific Integrated Circuit (ASIC), Field-Programmable Gate Array (FPGA) or another programmable logic device, discrete gate or transistor logic device, discrete hardware assembly and so on. The generic processor may be a microprocessor or any other conventional processor.

The memory 71 may be an internal storage unit of the controller 7, for example, a hard disk or an internal memory of the controller 7. The memory 71 may also be an external storage device of the controller 7, for example, a plug-connected hard disk, a Smart Media Card (SMC), a Secure Digital (SD) card, a Flash Card, and so on, that the controller 7 is equipped with. Further, the memory 71 may also include not only the internal storage unit of the controller 7 but also the external storage device. The memory 71 can store the computer program, and other programs and data that are required by the controller. The memory 71 can also temporarily store the data that have already been outputted or will be outputted.

A person skilled in the art can clearly understand that, in order for convenience and brevity of the description, the division of the above functional units and modules is merely taken as an example for the description. In practical applications, the above functions may be allocated to be completed by different functional units and modules according to demands, i.e., dividing the internal structure of the apparatus into different functional units or modules, to complete all or some of the functions described above. The functional units and modules may be integrated into one processing unit, or the units may also separately physically exist, or two or more of the units may also be integrated into one unit. The above-described integrated unit may be embodied in the form of hardware, and may also be embodied in the form of a software function unit. In addition, the particular names of the functional units and modules are merely for the convenience of distinguishing from each other, and are not intended to limit the protection scope of the present invention which is defined in the appended claims. The particular working processes of the units and modules in the above-described apparatus and controller may refer to the corresponding processes according to the above-described processes, and are not discussed further herein.

In the above, the descriptions on the examples have respective emphases, and the parts of a certain example that are not described or set forth in detail may refer to the relevant descriptions on the other examples.

A person skilled in the art can envisage that the units and the algorithm steps of the examples described with reference to the examples disclosed herein may be implemented by using electronic hardware or a combination of computer software and electronic hardware. Whether those functions are executed by hardware or software depends on the particular applications and the design constraints of the technical solutions. A person skilled in the art may employ different methods to implement the described functions with respect to each of the particular applications, but the implementation methods should not be considered as extending beyond the scope of the present invention which is defined in the appended claims.

It should be understood that the disclosed apparatus/controller and methods may be implemented in other manners. For example, the above-described device/controller is merely illustrative. For example, the division between the modules/units is merely a division in the logic functions, and in the practical implementation there may be another mode of division. For example, multiple units or components may be combined or may be integrated into another system, or some of the features may be omitted, or not implemented. Additionally, the coupling or direct coupling or communicative connection between the illustrated or discussed components may be via interfaces or the indirect coupling or communicative connection between the devices or units, and may be electric, mechanical or in other forms.

The units that are described as separate components may or may not be physically separate, and the components that are displayed as units may or may not be physical units. In other words, the components and the units may be located at the same one location, and may also be distributed to a plurality of network units. Some or all of the units may be selected according to practical demands to realize the purposes of the technical solutions according to the invention as defined in the claims.

The integrated modules/units, if embodied in the form of software function units and sold or used as an independent product, may be stored in a computer-readable storage medium. On the basis of such a comprehension, all or some of the processes of the methods according to the present invention may be implemented by relative hardware under control by a computer program. The computer program may be stored in a computer-readable storage medium, and the computer program, when executed by a processor, can implement the steps of the above methods for controlling starting of a vehicle. The computer program includes a computer program code, and the computer program code may be a source code, an object code, an executable file, some intermediate forms, and so on. The computer-readable medium may include any entity or device that can carry the computer program code, including a recording medium, a USB flash disk, a mobile hard disk drive, a diskette, an optical disk, a computer memory, a Read-Only Memory (ROM), a Random Access Memory (RAM), an electric carrier signal, a telecommunication signal, a software distribution medium and so on.

## Claims

1. A method for controlling starting of a vehicle, wherein the vehicle is provided with a P2 electric motor (11) and a gearbox that comprises a hydraulic torque converter (1), and the method for controlling starting of the vehicle is **characterized by**:
(S201) acquiring a starting type of the vehicle;
(S202) determining a basic power output value and a hydraulic-conversion hysteresis compensation value for compensating for a hysteresis amount of the hydraulic torque converter (1) that correspond to the starting type;
(S203) compensating for the basic power output value according to the hydraulic-conversion hysteresis compensation value, to obtain a target power output value;
according to the target power output value, determining to-be-outputted torques of the P2 electric motor (11) and an engine (9), or a to-be-outputted torque of the P2 electric motor (11), with respect to the starting type; and
(S204) controlling the vehicle to start according to the to-be-outputted torques of the P2 electric motor (11) and an engine (9) or the to-be-outputted torque of the P2 electric motor (11).

2. The method for controlling starting of the vehicle according to claim 1, wherein the starting type comprises creep starting;
the basic power output value comprises a purely-electric-creep-pump-impeller basic target rotational speed and a traditional-creep-pump-impeller basic target rotational speed;
the hydraulic-conversion hysteresis compensation value comprises a first rotational-speed compensation value; and
the step of determining the basic power output value and the hydraulic-conversion hysteresis compensation value for compensating for the hysteresis amount of the hydraulic torque converter (1) that correspond to the starting type comprises:
when the starting type is the creep starting, acquiring an operation mode of the vehicle;
if the operation mode is a purely electric mode, acquiring the purely-electric-creep-pump-impeller basic target rotational speed corresponding to the purely electric mode with respect to the creep starting;
if the operation mode is a hybrid-power mode, acquiring the traditional-creep-pump-impeller basic target rotational speed corresponding to the hybrid-power mode with respect to the creep starting;
acquiring a hydraulic-conversion load of the hydraulic torque converter; and
according to the hydraulic-conversion load and a first predetermined rotational-speed-compensation table, determining the first rotational-speed compensation value corresponding to the creep starting.

3. The method for controlling starting of the vehicle according to claim 2, wherein after the step of acquiring the operation mode of the vehicle, the method for controlling starting of the vehicle further comprises:
acquiring a slope resistance of the vehicle; and
according to the slope resistance and a second predetermined rotational-speed-compensation table, determining a second rotational-speed compensation value corresponding to the creep starting; and
the step of compensating for the basic power output value according to the hydraulic-conversion hysteresis compensation value comprises:
if the operation mode is the purely electric mode, compensating for the purely-electric-creep-pump-impeller basic target rotational speed according to the first rotational-speed compensation value and the second rotational-speed compensation value; and
if the operation mode is the hybrid-power mode, compensating for the traditional-creep-pump-impeller basic target rotational speed according to the first rotational-speed compensation value and the second rotational-speed compensation value.

4. The method for controlling starting of the vehicle according to claim 2, wherein the target power output value comprises a purely-electric-creep-pump-impeller target rotational speed; and
the step of, according to the target power output value, determining the to-be-outputted torque of the P2 electric motor (11) with respect to the starting type comprises:
if the operation mode is the purely electric mode, acquiring an actual rotational speed of the P2 electric motor (11); and
according to the purely-electric-creep-pump-impeller target rotational speed and the actual rotational speed, determining the to-be-outputted torque of the P2 electric motor (11) corresponding to the purely electric mode with respect to the creep starting.

5. The method for controlling starting of the vehicle according to claim 2, wherein the target power output value comprises a traditional-creep-pump-impeller target rotational speed; and
the step of, according to the target power output value, determining the to-be-outputted torques of the P2 electric motor (11) and the engine (9) with respect to the starting type comprises:
if the operation mode is the hybrid-power mode, acquiring an electricity-generation load of the P2 electric motor (11);
correcting the electricity-generation load, to obtain a corrected electricity-generation load, wherein the corrected electricity-generation load is less than the electricity-generation load;
determining an idle-speed target rotational speed of the vehicle according to the traditional-creep-pump-impeller target rotational speed; and
performing idle-speed controlling according to the idle-speed target rotational speed and the corrected electricity-generation load, to determine the to-be-outputted torques of the P2 electric motor (11) and the engine (9) corresponding to the hybrid-power mode with respect to the creep starting.

6. The method for controlling starting of the vehicle according to claim 1, wherein the starting type includes accelerated starting;
the basic power output value comprises a basic accelerator-pedal torque;
the hydraulic-conversion hysteresis compensation value comprises an accelerator-pedal shaft-end-torque compensation value; and
the step of determining the basic power output value and the hydraulic-conversion hysteresis compensation value for compensating for the hysteresis amount of the hydraulic torque converter (1) that correspond to the starting type comprises:
when the starting type is the accelerated starting, acquiring an accelerator-pedal opening degree;
according to the accelerator-pedal opening degree and a predetermined basic-torque table, determining the basic accelerator-pedal torque corresponding to the accelerated starting; and
when a state of a lock-up clutch (7) in the hydraulic torque converter (1) is being-disengaged, determining the accelerator-pedal shaft-end-torque compensation value corresponding to the accelerated starting according to the accelerator-pedal opening degree.

7. The method for controlling starting of the vehicle according to claim 6, wherein the target power output value comprises a target accelerator-pedal torque; and
the step of, according to the target power output value, determining the to-be-outputted torque of the P2 electric motor (11) with respect to the starting type comprises:
acquiring an operation mode of the vehicle; and
if the operation mode is a purely electric mode, determining the target accelerator-pedal torque to be the to-be-outputted torque of the P2 electric motor (11) with respect to the accelerated starting.

8. The method for controlling starting of the vehicle according to claim 6, wherein the target power output value comprises a target accelerator-pedal torque; and
the step of, according to the target power output value, determining the to-be-outputted torques of the P2 electric motor (11) and the engine (9) with respect to the starting type comprises:
acquiring an operation mode of the vehicle;
if the operation mode is a hybrid-power mode, acquiring an electricity-generation load of the P2 electric motor (11);
correcting the electricity-generation load, to obtain a corrected electricity-generation load, wherein the corrected electricity-generation load is less than the electricity-generation load;
determining the to-be-outputted torque of the P2 electric motor (11) with respect to the accelerated starting according to the corrected electricity-generation load; and
determining a sum of the to-be-outputted torque of the P2 electric motor (11) and the target accelerator-pedal torque to be the to-be-outputted torque of the engine (9) with respect to the accelerated starting.

9. The method for controlling starting of the vehicle according to claim 1, wherein the step of acquiring the starting type of the vehicle comprises:
when an accelerator pedal of the vehicle is not pressed down, determining the starting type to be creep starting; and
when the accelerator pedal of the vehicle is pressed down, determining the starting type to be accelerated starting.

10. The method for controlling starting of the vehicle according to claim 2, wherein the step of acquiring the operation mode of the vehicle comprises:
when the engine (9) of the vehicle is in an off-state, or a KO clutch of the vehicle is in a disengagement state, determining the operation mode to be the purely electric mode; and
when the engine (9) of the vehicle is in an on-state, and the KO clutch of the vehicle is in an engagement state, determining the operation mode to be the hybrid-power mode.

11. The method for controlling starting of the vehicle according to claim 2, wherein the hydraulic-conversion load is equal to C1*C2*n², wherein C1 represents an oil-temperature correction factor of the hydraulic torque converter, C2 represents a correction factor for a ratio of a turbine rotational speed to a basic target pump-impeller rotational speed of the hydraulic torque converter, and n represents the basic target pump-impeller rotational speed of the hydraulic torque converter.

12. The method for controlling starting of the vehicle according to claim 2, wherein both of the purely-electric-creep-pump-impeller basic target rotational speed and the traditional-creep-pump-impeller basic target rotational speed are 800 revolutions per minute.

13. The method for controlling starting of the vehicle according to claim 8, wherein the method further comprises: if the operation mode is the hybrid-power mode, acquiring a current vehicle speed of the vehicle and a current electricity-generation torque corresponding to the electricity-generation load, and subsequently executing the following steps:
according to the current electricity-generation torque, the current vehicle speed and a predetermined starting-torque correction table, determining a corrected starting torque;
determining a difference between the current electricity-generation torque and the corrected starting torque to be the to-be-outputted torque of the P2 electric motor (11) with respect to the accelerated starting; and
determining the sum of the to-be-outputted torque of the P2 electric motor (11) and the target accelerator-pedal torque to be the to-be-outputted torque of the engine (9) with respect to the accelerated starting.

14. An apparatus for controlling starting of a vehicle, wherein the vehicle is provided with a P2 electric motor (11) and a gearbox that comprises a hydraulic torque converter, and the apparatus for controlling starting of the vehicle is **characterized by**:
an acquiring module (61) configured for acquiring a starting type of the vehicle;
a first processing module (62) configured for determining a basic power output value and a hydraulic-conversion hysteresis compensation value for compensating for a hysteresis amount of the hydraulic torque converter (1) that correspond to the starting type;
a second processing module (63) configured for compensating for the basic power output value according to the hydraulic-conversion hysteresis compensation value, to obtain a target power output value; and according to the target power output value, determining to-be-outputted torques of the P2 electric motor (11) and an engine (9), or a to-be-outputted torque of the P2 electric motor (11), with respect to the starting type; and
a controlling module (64) configured for controlling the vehicle to start according to the to-be-outputted torques of the P2 electric motor (11) and the engine (9) or the to-be-outputted torque of the P2 electric motor (11).

15. A vehicle, provided with a P2 electric motor and a gearbox comprising a hydraulic torque converter, the vehicle comprising the apparatus according to claim 14 for controlling starting of the vehicle.

## Patentansprüche

1. Verfahren zum Steuern des Anfahrens eines Fahrzeugs, wobei das Fahrzeug mit einem P2-Elektromotor (11) und einem Getriebe, das einen hydraulischen Drehmomentwandler (1) aufweist, versehen ist, und das Verfahren zum Steuern des Anfahrens des Fahrzeugs **gekennzeichnet ist durch**:
(S201) Erfassen einer Anfahrart des Fahrzeugs;
(S202) Bestimmen eines Basis-Leistungsabgabewerts und eines Hydraulikwandlungshysterese-Kompensationswerts zum Kompensieren eines Hysteresebetrags des hydraulischen Drehmomentwandlers (1), die der Anfahrart entsprechen;
(S203) Kompensieren des Basis-Leistungsabgabewerts gemäß dem Hydraulikwandlungshysterese-Kompensationswert, um einen Ziel-Leistungsabgabewert zu erhalten;
Bestimmen, gemäß dem Ziel-Leistungsabgabewert, von abzugebenden Drehmomenten des P2-Elektromotors (11) und eines Motors (9) oder eines abzugebenden Drehmoments des P2-Elektromotors (11) in Bezug auf die Anfahrart; und
(S204) Steuern des Fahrzeugs zum Anfahren gemäß den abzugebenden Drehmomenten des P2-Elektromotors (11) und eines Motors (9) oder dem abzugebenden Drehmoment des P2-Elektromotors (11).

2. Verfahren zum Steuern des Anfahrens des Fahrzeugs nach Anspruch 1, wobei die Anfahrart Kriechanfahren aufweist;
der Basis-Leistungsabgabewert eine rein-elektrische Kriech-Pumpenrad-Basiszieldrehzahl und eine traditionelle Kriech-Pumpenrad-Basiszieldrehzahl aufweist;
der Hydraulikwandlungshysterese-Kompensationswert einen ersten Drehzahl-Kompensationswert aufweist; und
der Schritt des Bestimmens des Basis-Leistungsabgabewerts und des Hydraulikwandlungshysterese-Kompensationswerts zum Kompensieren des Hysteresebetrags des hydraulischen Drehmomentwandlers (1), die der Anfahrart entsprechen, aufweist:
wenn die Anfahrart das Kriechanfahren ist, Erfassen eines Betriebsmodus des Fahrzeugs;
falls der Betriebsmodus ein rein elektrischer Modus ist, Erfassen der rein-elektrischen Kriech-Pumpenrad-Basiszieldrehzahl, die dem rein elektrischen Modus in Bezug auf das Kriechanfahren entspricht;
falls der Betriebsmodus ein Hybridantriebsmodus ist, Erfassen der traditionellen Kriech-Pumpenrad-Basiszieldrehzahl, die dem Hybridantriebsmodus in Bezug auf das Kriechanfahren entspricht;
Erfassen einer Hydraulikwandlungslast des hydraulischen Drehmomentwandlers; und
Bestimmen des ersten Drehzahl-Kompensationswerts, der dem Kriechanfahren entspricht, gemäß der Hydraulikwandlungslast und einer ersten vorbestimmten Drehzahlkompensationstabelle.

3. Verfahren zum Steuern des Anfahrens des Fahrzeugs nach Anspruch 2, wobei nach dem Schritt des Erfassens des Betriebsmodus des Fahrzeugs das Verfahren zum Steuern des Anfahrens des Fahrzeugs ferner aufweist:
Erfassen eines Steigungswiderstands des Fahrzeugs; und
Bestimmen eines zweiten Drehzahl-Kompensationswerts, der dem Kriechanfahren entspricht, gemäß dem Steigungswiderstand und einer zweiten vorbestimmten Drehzahlkompensationstabelle; und
der Schritt des Kompensierens des Basis-Leistungsabgabewerts gemäß dem Hydraulikwandlungshysterese-Kompensationswert aufweist:
falls der Betriebsmodus der rein elektrische Modus ist, Kompensieren der rein-elektrischen Kriech-Pumpenrad-Basiszieldrehzahl gemäß dem ersten Drehzahl-Kompensationswert und dem zweiten Drehzahl-Kompensationswert; und
falls der Betriebsmodus der Hybridantriebsmodus ist, Kompensieren der traditionellen Kriech-Pumpenrad-Basiszieldrehzahl gemäß dem ersten Drehzahl-Kompensationswert und dem zweiten Drehzahl-Kompensationswert.

4. Verfahren zum Steuern des Anfahrens des Fahrzeugs nach Anspruch 2, wobei der Ziel-Leistungsabgabewert eine rein-elektrische Kriech-Pumpenrad-Zieldrehzahl aufweist; und
der Schritt des Bestimmens - gemäß dem Ziel-Leistungsabgabewert - des abzugebenden Drehmoments des P2-Elektromotors (11) in Bezug auf die Anfahrart aufweist:
falls der Betriebsmodus der rein elektrische Modus ist, Erfassen einer tatsächlichen Drehzahl des P2-Elektromotors (11); und
Bestimmen des abzugebenden Drehmoments des P2-Elektromotors (11), das dem rein elektrischen Modus in Bezug auf das Kriechanfahren entspricht, gemäß der rein-elektrischen Kriech-Pumpenrad-Zieldrehzahl und der tatsächlichen Drehzahl.

5. Verfahren zum Steuern des Anfahrens des Fahrzeugs nach Anspruch 2, wobei der Ziel-Leistungsabgabewert eine traditionelle Kriech-Pumpenrad-Zieldrehzahl aufweist; und
der Schritt des Bestimmens - gemäß dem Ziel-Leistungsabgabewert - der abzugebenden Drehmomente des P2-Elektromotors (11) und des Motors (9) in Bezug auf die Anfahrart aufweist:
falls der Betriebsmodus der Hybridantriebsmodus ist, Erfassen einer Stromerzeugungslast des P2-Elektromotors (11);
Korrigieren der Stromerzeugungslast, um eine korrigierte Stromerzeugungslast zu erhalten, wobei die korrigierte Stromerzeugungslast kleiner als die Stromerzeugungslast ist;
Bestimmen einer Leerlauf-Zieldrehzahl des Fahrzeugs gemäß der traditionellen Kriech-Pumpenrad-Zieldrehzahl; und
Durchführen einer Leerlaufsteuerung gemäß der Leerlauf-Zieldrehzahl und der korrigierten Stromerzeugungslast, um die abzugebenden Drehmomente des P2-Elektromotors (11) und des Motors (9), die dem Hybridantriebsmodus in Bezug auf das Kriechanfahren entsprechen, zu bestimmen.

6. Verfahren zum Steuern des Anfahrens des Fahrzeugs nach Anspruch 1, wobei die Anfahrart beschleunigtes Anfahren aufweist;
der Basis-Leistungsabgabewert ein Basis-Fahrpedaldrehmoment aufweist;
der Hydraulikwandlungshysterese-Kompensationswert einen Fahrpedal-Wellenendendrehmoment-Kompensationswert aufweist; und
der Schritt des Bestimmens des Basis-Leistungsabgabewerts und des Hydraulikwandlungshysterese-Kompensationswerts zum Kompensieren des Hysteresebetrags des hydraulischen Drehmomentwandlers (1), die der Anfahrart entsprechen, aufweist:
wenn die Anfahrart das beschleunigte Anfahren ist, Erfassen eines Fahrpedalöffnungsgrads;
Bestimmen des Basis-Fahrpedaldrehmoments, das dem beschleunigten Anfahren entspricht, gemäß dem Fahrpedalöffnungsgrad und einer vorbestimmten Basisdrehmomenttabelle; und
wenn ein Zustand einer Überbrückungskupplung (7) in dem hydraulischen Drehmomentwandler (1) ausrückend ist, Bestimmen des Fahrpedal-Wellenendendrehmoment-Kompensationswerts, der dem beschleunigten Anfahren entspricht, gemäß dem Fahrpedalöffnungsgrad.

7. Verfahren zum Steuern des Anfahrens des Fahrzeugs nach Anspruch 6, wobei der Ziel-Leistungsabgabewert ein Ziel-Fahrpedaldrehmoment aufweist; und
der Schritt des Bestimmens - gemäß dem Ziel-Leistungsabgabewert - des abzugebenden Drehmoments des P2-Elektromotors (11) in Bezug auf die Anfahrart aufweist:
Erfassen eines Betriebsmodus des Fahrzeugs; und
falls der Betriebsmodus ein rein elektrischer Modus ist, Bestimmen des Ziel-Fahrpedaldrehmoments als das abzugebende Drehmoment des P2-Elektromotors (11) in Bezug auf das beschleunigte Anfahren.

8. Verfahren zum Steuern des Anfahrens des Fahrzeugs nach Anspruch 6, wobei der Ziel-Leistungsabgabewert ein Ziel-Fahrpedaldrehmoment aufweist; und
der Schritt des Bestimmens - gemäß dem Ziel-Leistungsabgabewert - der abzugebenden Drehmomente des P2-Elektromotors (11) und des Motors (9) in Bezug auf die Anfahrart aufweist:
Erfassen eines Betriebsmodus des Fahrzeugs;
falls der Betriebsmodus ein Hybridantriebsmodus ist, Erfassen einer Stromerzeugungslast des P2-Elektromotors (11);
Korrigieren der Stromerzeugungslast, um eine korrigierte Stromerzeugungslast zu erhalten, wobei die korrigierte Stromerzeugungslast kleiner als die Stromerzeugungslast ist;
Bestimmen des abzugebenden Drehmoments des P2-Elektromotors (11) in Bezug auf das beschleunigte Anfahren gemäß der korrigierten Stromerzeugungslast; und
Bestimmen einer Summe des abzugebenden Drehmoments des P2-Elektromotors (11) und des Ziel-Fahrpedaldrehmoments als das abzugebende Drehmoment des Motors (9) in Bezug auf das beschleunigte Anfahren.

9. Verfahren zum Steuern des Anfahrens des Fahrzeugs nach Anspruch 1, wobei der Schritt des Erfassens der Anfahrart des Fahrzeugs aufweist:
wenn ein Fahrpedal des Fahrzeugs nicht niedergedrückt ist, Bestimmen der Anfahrart als Kriechanfahren; und
wenn das Fahrpedal des Fahrzeugs niedergedrückt ist, Bestimmen der Anfahrart als beschleunigtes Anfahren.

10. Verfahren zum Steuern des Anfahrens des Fahrzeugs nach Anspruch 2, wobei der Schritt des Erfassens des Betriebsmodus des Fahrzeugs aufweist:
wenn der Motor (9) des Fahrzeugs in einem Aus-Zustand ist oder eine Ko-Kupplung des Fahrzeugs in einem Ausrückzustand ist, Bestimmen des Betriebsmodus als den rein elektrischen Modus; und
wenn der Motor (9) des Fahrzeugs in einem Ein-Zustand ist und die Ko-Kupplung des Fahrzeugs in einem Einrückzustand ist, Bestimmen des Betriebsmodus als den Hybridantriebsmodus.

11. Verfahren zum Steuern des Anfahrens des Fahrzeugs nach Anspruch 2, wobei die Hydraulikwandlungslast gleich C1*C2*n² ist, wobei C1 einen Öltemperatur-Korrekturfaktor des hydraulischen Drehmomentwandlers darstellt, C2 einen Korrekturfaktor für ein Verhältnis einer Turbinendrehzahl zu einer Pumpenrad-Basiszieldrehzahl des hydraulischen Drehmomentwandlers darstellt und n die Pumpenrad-Basiszieldrehzahl des hydraulischen Drehmomentwandlers darstellt.

12. Verfahren zum Steuern des Anfahrens des Fahrzeugs nach Anspruch 2, wobei sowohl die rein-elektrische Kriech-Pumpenrad-Basiszieldrehzahl als auch die traditionelle Kriech-Pumpenrad-Basiszieldrehzahl 800 Umdrehungen pro Minute betragen.

13. Verfahren zum Steuern des Anfahrens des Fahrzeugs nach Anspruch 8, wobei das Verfahren ferner aufweist: falls der Betriebsmodus der Hybridantriebsmodus ist, Erfassen einer aktuellen Fahrzeuggeschwindigkeit des Fahrzeugs und eines aktuellen Stromerzeugungsdrehmoments, das der Stromerzeugungslast entspricht, und anschließend Ausführen der folgenden Schritte:
Bestimmen eines korrigierten Anfahrdrehmoments gemäß dem aktuellen Stromerzeugungsdrehmoment, der aktuellen Fahrzeuggeschwindigkeit und einer vorbestimmten Anfahrdrehmoment-Korrekturtabelle;
Bestimmen einer Differenz zwischen dem aktuellen Stromerzeugungsdrehmoment und dem korrigierten Anfahrdrehmoment als das abzugebende Drehmoment des P2-Elektromotors (11) in Bezug auf das beschleunigte Anfahren; und
Bestimmen der Summe des abzugebenden Drehmoments des P2-Elektromotors (11) und des Ziel-Fahrpedaldrehmoments als das abzugebende Drehmoment des Motors (9) in Bezug auf das beschleunigte Anfahren.

14. Vorrichtung zum Steuern des Anfahrens eines Fahrzeugs, wobei das Fahrzeug mit einem P2-Elektromotor (11) und einem Getriebe, das einen hydraulischen Drehmomentwandler aufweist, versehen ist, und die Vorrichtung zum Steuern des Anfahrens des Fahrzeugs **gekennzeichnet ist durch**:
ein Erfassungsmodul (61), das zum Erfassen einer Anfahrart des Fahrzeugs eingerichtet ist;
ein erstes Verarbeitungsmodul (62), das zum Bestimmen eines Basis-Leistungsabgabewerts und eines Hydraulikwandlungshysterese-Kompensationswerts zum Kompensieren eines Hysteresebetrags des hydraulischen Drehmomentwandlers (1), die der Anfahrart entsprechen, eingerichtet ist;
ein zweites Verarbeitungsmodul (63), das dazu eingerichtet ist, den Basis-Leistungsabgabewert gemäß dem Hydraulikwandlungshysterese-Kompensationswert zu kompensieren, um einen Ziel-Leistungsabgabewert zu erhalten; und, gemäß dem Ziel-Leistungsabgabewert, abzugebende Drehmomente des P2-Elektromotors (11) und eines Motors (9) oder ein abzugebendes Drehmoment des P2-Elektromotors (11) in Bezug auf die Anfahrart zu bestimmen; und
ein Steuermodul (64), das zum Steuern des Fahrzeugs zum Anfahren gemäß den abzugebenden Drehmomenten des P2-Elektromotors (11) und des Motors (9) oder dem abzugebenden Drehmoment des P2-Elektromotors (11) eingerichtet ist.

15. Fahrzeug, das mit einem P2-Elektromotor und einem Getriebe, das einen hydraulischen Drehmomentwandler aufweist, versehen ist, wobei das Fahrzeug die Vorrichtung zum Steuern des Anfahrens des Fahrzeugs nach Anspruch 14 aufweist.

## Revendications

1. Procédé pour commander le démarrage d'un véhicule, dans lequel :
le véhicule est muni d'un moteur électrique P2 (11) et d'une boîte de vitesses qui comprend un convertisseur de couple hydraulique (1), et le procédé pour commander le démarrage du véhicule est **caractérisé par** :
(S201) l'acquisition d'un type de démarrage du véhicule ;
(S202) la détermination d'une valeur de sortie de puissance de base et d'une valeur de compensation d'hystérésis de conversion hydraulique pour compenser une quantité d'hystérésis du convertisseur de couple hydraulique (1), lesquelles valeurs correspondent au type de démarrage ;
(S203) la compensation de la valeur de sortie de puissance de base conformément à la valeur de compensation d'hystérésis de conversion hydraulique, afin d'obtenir une valeur de sortie de puissance cible ;
conformément à la valeur de sortie de puissance cible, la détermination de couples à émettre en sortie du moteur électrique P2 (11) et d'un moteur thermique (9) ou d'un couple à émettre en sortie du moteur électrique P2 (11), en rapport avec le type de démarrage ; et
(S204) la commande du véhicule pour qu'il démarre conformément aux couples à émettre en sortie du moteur électrique P2 (11) et du moteur thermique (9) ou conformément au couple à émettre en sortie du moteur électrique P2 (11).

2. Procédé pour commander le démarrage du véhicule selon la revendication 1, dans lequel :
le type de démarrage comprend un démarrage lent ;
la valeur de sortie de puissance de base comprend une vitesse de rotation cible de base de roue à aubes de pompe pour un démarrage de type lent purement électrique et une vitesse de rotation cible de base de roue à aubes de pompe pour un démarrage de type lent traditionnel ;
la valeur de compensation d'hystérésis de conversion hydraulique comprend une première valeur de compensation de vitesse de rotation ; et
l'étape de détermination de la valeur de sortie de puissance de base et de la valeur de compensation d'hystérésis de conversion hydraulique pour compenser la quantité d'hystérésis du convertisseur de couple hydraulique (1), lesquelles valeurs correspondent au type de démarrage, comprend :
lorsque le type de démarrage est le démarrage lent, l'acquisition d'un mode de fonctionnement du véhicule ;
si le mode de fonctionnement est un mode purement électrique, l'acquisition de la vitesse de rotation cible de base de roue à aubes de pompe pour un démarrage de type lent purement électrique qui correspond au mode purement électrique en rapport avec le démarrage lent ;
si le mode de fonctionnement est un mode à puissance hybride, l'acquisition de la vitesse de rotation cible de base de roue à aubes de pompe pour un démarrage de type lent traditionnel qui correspond au mode à puissance hybride en rapport avec le démarrage lent ;
l'acquisition d'une charge de conversion hydraulique du convertisseur de couple hydraulique ; et
conformément à la charge de conversion hydraulique et à une première table de compensation de vitesse de rotation prédéterminée, la détermination de la première valeur de compensation de vitesse de rotation qui correspond au démarrage lent.

3. Procédé pour commander le démarrage du véhicule selon la revendication 2, dans lequel :
après l'étape d'acquisition du mode de fonctionnement du véhicule, le procédé pour commander le démarrage du véhicule comprend en outre :
l'acquisition d'une résistance à la pente du véhicule ; et
conformément à la résistance à la pente et à une seconde table de compensation de vitesse de rotation prédéterminée, la détermination d'une seconde valeur de compensation de vitesse de rotation qui correspond au démarrage lent ; et
l'étape de compensation de la valeur de sortie de puissance de base conformément à la valeur de compensation d'hystérésis de conversion hydraulique comprend :
si le mode de fonctionnement est le mode purement électrique, la compensation de la vitesse de rotation cible de base de roue à aubes de pompe pour un démarrage de type lent purement électrique conformément à la première valeur de compensation de vitesse de rotation et à la seconde valeur de compensation de vitesse de rotation ; et
si le mode de fonctionnement est le mode à puissance hybride, la compensation de la vitesse de rotation cible de base de roue à aubes de pompe pour un démarrage de type lent traditionnel conformément à la première valeur de compensation de vitesse de rotation et à la seconde valeur de compensation de vitesse de rotation.

4. Procédé pour commander le démarrage du véhicule selon la revendication 2, dans lequel :
la valeur de sortie de puissance cible comprend une vitesse de rotation cible de roue à aubes de pompe pour un démarrage de type lent purement électrique ; et
l'étape de détermination, conformément à la valeur de sortie de puissance cible, du couple à émettre en sortie du moteur électrique P2 (11) en rapport avec le type de démarrage comprend :
si le mode de fonctionnement est le mode purement électrique, l'acquisition d'une vitesse de rotation réelle du moteur électrique P2 (11) ; et
conformément à la vitesse de rotation cible de roue à aubes de pompe pour un démarrage de type lent purement électrique et à la vitesse de rotation réelle, la détermination du couple à émettre en sortie du moteur électrique P2 (11) qui correspond au mode purement électrique en rapport avec le démarrage lent.

5. Procédé pour commander le démarrage du véhicule selon la revendication 2, dans lequel :
la valeur de sortie de puissance cible comprend une vitesse de rotation cible de roue à aubes de pompe pour un démarrage de type lent traditionnel ; et
l'étape de détermination, conformément à la valeur de sortie de puissance cible, des couples à émettre en sortie du moteur électrique P2 (11) et du moteur thermique (9) en rapport avec le type de démarrage comprend :
si le mode de fonctionnement est le mode à puissance hybride, l'acquisition d'une charge de génération d'électricité du moteur électrique P2 (11) ;
la correction de la charge de génération d'électricité afin d'obtenir une charge de génération d'électricité corrigée, dans lequel la charge de génération d'électricité corrigée est inférieure à la charge de génération d'électricité ;
la détermination d'une vitesse de rotation cible en vitesse de ralenti du véhicule conformément à la vitesse de rotation cible de roue à aubes de pompe pour un démarrage de type lent traditionnel ; et
la réalisation d'une commande de vitesse de ralenti conformément à la vitesse de rotation cible en vitesse de ralenti et à la charge de génération d'électricité corrigée afin de déterminer les couples à émettre en sortie du moteur électrique P2 (11) et du moteur thermique (9) qui correspondent au mode à puissance hybride en rapport avec le démarrage lent.

6. Procédé pour commander le démarrage du véhicule selon la revendication 1, dans lequel :
le type de démarrage inclut un démarrage accéléré ;
la valeur de sortie de puissance de base comprend un couple de pédale d'accélérateur de base ;
la valeur de compensation d'hystérésis de conversion hydraulique comprend une valeur de compensation de couple d'extrémité d'arbre de pédale d'accélérateur ; et
l'étape de détermination de la valeur de sortie de puissance de base et de la valeur de compensation d'hystérésis de conversion hydraulique pour compenser la quantité d'hystérésis du convertisseur de couple hydraulique (1), lesquelles valeurs correspondent au type de démarrage, comprend :
lorsque le type de démarrage est le démarrage accéléré, l'acquisition d'un degré d'ouverture de pédale d'accélérateur ;
conformément au degré d'ouverture de pédale d'accélérateur et à une table de couples de base prédéterminée, la détermination du couple de pédale d'accélérateur de base qui correspond au démarrage accéléré ; et
lorsqu'un état d'un embrayage de verrouillage (7) dans le convertisseur de couple hydraulique (1) est un état en cours de désengagement, la détermination de la valeur de compensation de couple d'extrémité d'arbre de pédale d'accélérateur qui correspond au démarrage accéléré conformément au degré d'ouverture de pédale d'accélérateur.

7. Procédé pour commander le démarrage du véhicule selon la revendication 6, dans lequel :
la valeur de sortie de puissance cible comprend un couple de pédale d'accélérateur cible ; et
l'étape de détermination, conformément à la valeur de sortie de puissance cible, du couple à émettre en sortie du moteur électrique P2 (11) en rapport avec le type de démarrage comprend :
l'acquisition d'un mode de fonctionnement du véhicule ; et
si le mode de fonctionnement est un mode purement électrique, la détermination du couple de pédale d'accélérateur cible comme étant le couple à émettre en sortie du moteur électrique P2 (11) en rapport avec le démarrage accéléré.

8. Procédé pour commander le démarrage du véhicule selon la revendication 6, dans lequel :
la valeur de sortie de puissance cible comprend un couple de pédale d'accélérateur cible ; et
l'étape de détermination, conformément à la valeur de sortie de puissance cible, des couples à émettre en sortie du moteur électrique P2 (11) et du moteur thermique (9) en rapport avec le type de démarrage comprend :
l'acquisition d'un mode de fonctionnement du véhicule ;
si le mode de fonctionnement est un mode à puissance hybride, l'acquisition d'une charge de génération d'électricité du moteur électrique P2 (11) ;
la correction de la charge de génération d'électricité afin d'obtenir une charge de génération d'électricité corrigée, dans lequel la charge de génération d'électricité corrigée est inférieure à la charge de génération d'électricité ;
la détermination du couple à émettre en sortie du moteur électrique P2 (11) en rapport avec le démarrage accéléré conformément à la charge de génération d'électricité corrigée ; et
la détermination d'une somme du couple à émettre en sortie du moteur électrique P2 (11) et du couple de pédale d'accélérateur cible comme étant le couple à émettre en sortie du moteur thermique (9) en rapport avec le démarrage accéléré.

9. Procédé pour commander le démarrage du véhicule selon la revendication 1, dans lequel :
l'étape d'acquisition du type de démarrage du véhicule comprend :
lorsqu'une pédale d'accélérateur du véhicule n'est pas enfoncée, la détermination du type de démarrage comme étant le démarrage lent ; et
lorsque la pédale d'accélérateur du véhicule est enfoncée, la détermination du type de démarrage comme étant le démarrage accéléré.

10. Procédé pour commander le démarrage du véhicule selon la revendication 2, dans lequel :
l'étape d'acquisition du mode de fonctionnement du véhicule comprend :
lorsque le moteur thermique (9) du véhicule est dans un état de désactivation ou qu'un embrayage K0 du véhicule est dans un état de désengagement, la détermination du mode de fonctionnement comme étant le mode purement électrique ; et
lorsque le moteur thermique (9) du véhicule est dans un état d'activation et que l'embrayage K0 du véhicule est dans un état d'engagement, la détermination du mode de fonctionnement comme étant le mode à puissance hybride.

11. Procédé pour commander le démarrage du véhicule selon la revendication 2, dans lequel :
la charge de conversion hydraulique est égale à C1*C2*n², où C1 représente un facteur de correction de température d'huile du convertisseur de couple hydraulique, C2 représente un facteur de correction pour un rapport d'une vitesse de rotation de turbine sur une vitesse de rotation de roue à aubes de pompe cible de base du convertisseur de couple hydraulique et n représente la vitesse de rotation de roue à aubes de pompe cible de base du convertisseur de couple hydraulique.

12. Procédé pour commander le démarrage du véhicule selon la revendication 2, dans lequel la vitesse de rotation cible de base de roue à aubes de pompe pour un démarrage de type lent purement électrique et la vitesse de rotation cible de base de roue à aubes de pompe pour un démarrage de type lent traditionnel sont toutes deux de 800 tours par minute (tr/m).

13. Procédé pour commander le démarrage du véhicule selon la revendication 8, dans lequel le procédé comprend en outre :
si le mode de fonctionnement est le mode à puissance hybride, l'acquisition d'une vitesse de véhicule courante du véhicule et d'un couple de génération d'électricité courant qui correspondent à la charge de génération d'électricité et ensuite, l'exécution des étapes suivantes :
conformément au couple de génération d'électricité courant, à la vitesse de véhicule courante et à une table de correction de couple de démarrage prédéterminée, la détermination d'un couple de démarrage corrigé ;
la détermination d'une différence entre le couple de génération d'électricité courant et le couple de démarrage corrigé comme étant le couple à émettre en sortie du moteur électrique P2 (11) en rapport avec le démarrage accéléré ; et
la détermination de la somme du couple à émettre en sortie du moteur électrique P2 (11) et du couple de pédale d'accélérateur cible comme étant le couple à émettre en sortie du moteur thermique (9) en rapport avec le démarrage accéléré.

14. Appareil pour commander le démarrage d'un véhicule, dans lequel :
le véhicule est muni d'un moteur électrique P2 (11) et d'une boîte de vitesses qui comprend un convertisseur de couple hydraulique, et l'appareil pour commander le démarrage du véhicule est **caractérisé par** :
un module d'acquisition (61) configuré pour acquérir un type de démarrage du véhicule ;
un premier module de traitement (62) configuré pour déterminer une valeur de sortie de puissance de base et une valeur de compensation d'hystérésis de conversion hydraulique pour compenser une quantité d'hystérésis du convertisseur de couple hydraulique (1), lesquelles valeurs correspondent au type de démarrage ;
un second module de traitement (63) configuré pour compenser la valeur de sortie de puissance de base conformément à la valeur de compensation d'hystérésis de conversion hydraulique, afin d'obtenir une valeur de sortie de puissance cible ; et conformément à la valeur de sortie de puissance cible, pour déterminer des couples à émettre en sortie du moteur électrique P2 (11) et d'un moteur thermique (9) ou un couple à émettre en sortie du moteur électrique P2 (11), en rapport avec le type de démarrage ; et
un module de commande (64) configuré pour commander le véhicule pour qu'il démarre conformément aux couples à émettre en sortie du moteur électrique P2 (11) et du moteur thermique (9) ou conformément au couple à émettre en sortie du moteur électrique P2 (11).

15. Véhicule, muni d'un moteur électrique P2 et d'une boîte de vitesses qui comprend un convertisseur de couple hydraulique, le véhicule comprenant l'appareil selon la revendication 14 pour commander le démarrage du véhicule.
